# EUROPEAN PATENT APPLICATION

(11) **EP 4 231 101 A1**
(43) Date of publication of application: **23.08.2023**
(21) Application number: 22157744.8
(22) Date of filing: 21.02.2022
(51) Int. Cl.: G05B 13/02

(54) **CONTROLLER AND METHOD FOR PROVIDING AN OPTIMISED CONTROL SIGNAL FOR CONTROLLING A TECHNICAL SYSTEM**

(71) Applicant: Siemens Aktiengesellschaft, 80333 München (DE)
(72) Inventor: Khalil, Mohamed, 81379 München (DE); Lee, Benjamin, 80637 Muenchen (DE); Paffrath, Meinhard, 85622 Feldkirchen (DE)
(74) Representative: Siemens Patent Attorneys

(57) **Abstract**

The invention provides a controller (CTL) and a method for providing an optimised control signal for controlling a technical system (TS). The controller (CTL) comprises:
- an input module (INP) configured to read in sensor data (SD) of the technical system,
- a configuration module (CFG) configured to provide a first configuration parameter (C1) for configuring an optimisation module and a second configuration parameter (C2) for configuring an uncertainty quantification module,
- the optimisation module (OPT) configured to provide a control signal (CS) depending on the first configuration parameter,
- the uncertainty quantification module (UQ) configured
- to provide an uncertainty range or statistical distribution for the control signal depending on the second configuration parameter, and
- to determine the respective performance values for control signals within the uncertainty range or the statistical distribution by means of a computer-aided simulation of the technical system considering the sensor data,
- to analyse the respective performance values, and
- to provide an analysis result (ANR) to the optimisation module,
and
- an output module configured to output the optimised control for controlling the technical system depending on the analysis result (ANR).

## Description

The present invention relates to a controller and a computer-implemented method for providing an optimised control signal for controlling a technical system, as well as a computer program product.

Controlling of industrial machinery can be extremely challenging due to the underlying uncertainties in the environmental and/or operation conditions. Model-predictive-control is for example a well-established, widely used approach for controlling industrial machinery, and computer-aided simulations models are its backbone. These simulation models are typically fed information about the machinery operation and/or the environment and are expected to yield the most appropriate control decision.

Typically, sensors are used to collect information about the surroundings, as well as the system responses under given actuations. However, sensor information can be inaccurate or non-precise, as their readings are normally associated with deviations from the reality. If such misleading information is used in a model-predictive-control context, the simulation model will output a misleading control as its inputs.

Traditional control systems (e.g., bang-bang / PID controller) only consider a single loop feedback, a small set of system class and single input / single output systems. Uncertainties are however not considered. Modern control systems are based on model predictive control (MPC), are multivariate and can handle multiple input multiple output systems. They are often combined with Kalman filters for estimation of states which are not directly measurable. But the presence of uncertainties can deteriorate the performance of MPC and a robust model predictive control may become necessary. However, implementations of robust MPC are often impractical. Robust MPC relies upon solving an inverse problem for the mechanics of the system to be controlled. This inverse problem is prone to several problems. First, the inverse problem may not always be well-posed, or worse yet not defined. Further, it is generally not possible to create the inverse mapping without the use of some model simplifications such as linearization. As a result, Robust MPC in general can fail to offer a practical solution in many contexts.

It is therefore an objective of the present invention to provide a control for a technical system taking inaccuracies in sensor inputs into account.

The object is solved by the features of the independent claims. The dependent claims contain further developments of the invention.

The invention provides according to the first aspect a controller for providing an optimised control signal for controlling a technical system, the controller comprising:
- an input module configured to read in sensor data related to the technical system,
- a configuration module configured to provide a first configuration parameter for configuring an optimisation module and a second configuration parameter for configuring an uncertainty quantification module,
- the optimisation module configured to provide a control signal depending on the first configuration parameter,
- the uncertainty quantification module configured
   - to provide an uncertainty range or statistical distribution for the control signal depending on the second configuration parameter,
   - to determine respective performance values for control signals within the uncertainty range or the statistical distribution by means of a computer-aided simulation of the technical system considering the sensor data,
      and
   - to analyse the respective performance values and to provide an analysis result,
      and
- an output module configured to output the optimised control signal for controlling the technical system depending on the analysis result.

If not indicated differently the terms "calculate", "perform", "computer-implemented", "compute", "determine", "generate", "configure", "reconstruct", and the like, preferably are related to acts and/or processes and/or steps which change and/or generate data, wherein data can particularly be presented as physical data, and which can be performed by a computer or processor. The term "computer" can be interpreted broadly and can be a personal computer, server, mobile computing device, or a processor such as a central processing unit (CPU) or microprocessor.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention.

The proposed method has the advantage that uncertainties of sensor measurements as well as uncertainties of other system parameters are considered when determining a control signal for controlling the technical system. In other words, by explicitly addressing uncertainty, the system is not controlled using presumably incorrect input values about the form of uncertainty. Therefore, a more accurate control can be realized.

According to a preferred embodiment of the controller, the optimisation module can further be configured to select an optimised control signal or to provide another control signal depending on the analysis result provided by the uncertainty quantification module.

The optimisation module can for example include a set of algorithms suited for black-box-style optimisation, e.g., evolutionary algorithms, gradient based, brute force etc. Based for example on the algorithm used, the optimisation module can for example propose additional control signals to be further investigated by retriggering a new analysis and a new chain of simulations managed by the uncertainty quantification module. Therefore, an iterative optimisation approach can be realized. Alternatively, once a termination condition has been reached, e.g., maximum numbers of options, expected improvement, time allotted, etc., the optimisation module can select the control signal as optimal that had the optimal analysis result.

According to another embodiment of the controller, the first configuration parameter and/or the second configuration parameter can depend on the sensor data.

For example, the sensor data can present a first selection criterium for selecting a first control signal and/or a respective uncertainty range. Therefore, it is possible to limit a selection range of possible control signals.

According to a preferred embodiment of the controller, the first configuration parameter can relate to a predefined range of control signals.

Preferably, the optimisation module picks a first control signal to be analysed out of a predefined range of control signals. Therefore, the optimisation procedure can be expedited.

According to a preferred embodiment of the controller, the second configuration parameter can relate to a given measurement uncertainty of the sensor data and/or a given parameter uncertainty of a parameter of the computer-aided simulation.

Therefore, different sources of uncertainties can be considered. This further enhances the quality of the resulting optimised control signal.

According to another embodiment of the controller, the optimizing module can be configured to provide a control signal by means of an optimisation algorithm.

According to a preferred embodiment of the controller, the uncertainty quantification module can be configured to determine the respective performance values for control signals within the uncertainty range or the statistical distribution by means of the computer-aided simulation of the technical system considering also a given measurement uncertainty of the sensor data and/or a given parameter uncertainty of a parameter of the computer-aided simulation.

In that way, several sources of uncertainties can be considered.

The invention provides according to the second aspect a computer-implemented method for providing an optimised control signal for controlling a technical system, the method comprising the steps:
a) reading in sensor data related to the technical system,
b) providing a first configuration parameter for configuring an optimisation module and a second configuration parameter for configuring an uncertainty quantification module,
c) providing, by the optimisation module, a control signal depending on the first configuration parameter,
d) providing, by the uncertainty quantification module, an uncertainty range or statistical distribution for the control signal depending on the second configuration parameter,
e) determining respective performance values for control signals within the uncertainty range or the statistical distribution by means of a computer-aided simulation of the technical system considering the sensor data,
f) analysing the respective performance values and providing an analysis result,
   and
g) outputting the optimised control signal for controlling the technical system depending on the analysis result.

According to a preferred embodiment, the method further comprises the step depending on the analysis result, outputting the optimised control signal or providing another control signal and repeating the aforementioned method steps d)-f).

According to a preferred embodiment of the method more than one control signal and corresponding uncertainty ranges or statistical distributions are provided and the aforementioned method steps e)-f) are performed for each of these control signals in parallel.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: shows an exemplary embodiment of the controller according to the invention; and
- Fig. 2:: shows an exemplary embodiment of the computer-implemented method for providing an optimised control signal for controlling a technical system.

Equivalent parts in the different figures are labeled with the same reference signs.

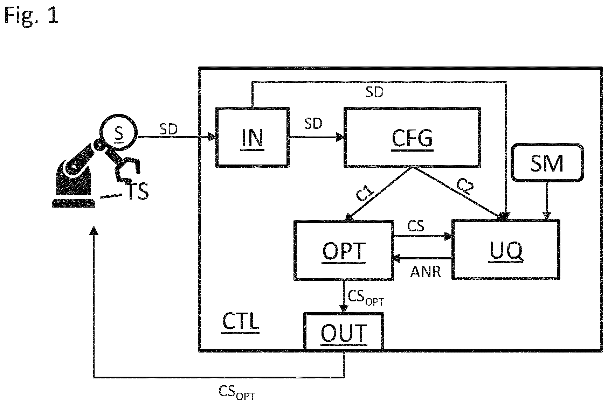

Figure 1 shows a first exemplary embodiment of a controller according to the invention. The controller CTL is configured to provide an optimised control signal for controlling a technical system TS. The controller can for example be a physical device that can connect to a measurement and automation system of the technical system TS. Preferably, the controller utilizes a standard API to interact with ports of the automation system in order to read in sensor values and to send control actuation commands. A technical system can be for example a device or machine. Moreover, a technical system can also be a plant or production plant. The control signal can also be referred to as actuation option.

The technical system TS can for example be a production machine which comprises at least one sensor S. In addition, or alternatively, at least one sensor S can also be assigned to the machine TS. For example, the sensor S is a heat sensor measuring an ambient temperature of the machine TS.

The controller CTL is configured to provide an optimised control signal CS_{OPT} for controlling the technical system TS. The sensor S provides measurement data SD to the controller CTL.

The controller CTL comprises an input module INP, a configuration module CFG, an optimisation module OPT, an uncertainty quantification module UQ, and an output unit OUT.

The input unit INP is configured to read in the sensor data SD related to the technical system TS provided. The sensor data SD are transmitted to the configuration module CFG and the uncertainty quantification module UQ.

The configuration module CFG is configured to provide at least one first configuration parameter C1 for configuring the optimisation module OPT and at least one second configuration parameter C2 for configuring the uncertainty quantification module UQ. The configuration module CFG is further configured to set the provided configuration parameters C1, C2 and to configure the optimisation module OPT and the uncertainty quantification module UQ, accordingly.

Preferably, the first configuration parameter(s) C1 relate(s) to a range of selectable control signals. The second configuration parameter(s) C2 preferably relate(s) to a predefined measurement uncertainty of the sensor data and/or a given parameter uncertainty of a parameter of the computer-aided simulation. Both, the first and second configuration parameters C1, C2 can depend on the sensor data SD.

Furthermore, the configuration module CFG can set the parameters of the workflow to determine the optimised control signal described below. For example, the configuration module CFG can define the execution rate of the workflow, e.g., 10Hz, Is, 15min, etc.

The optimisation module OPT is configured to provide a control signal depending on its configuration, i.e., depending on the first configuration parameters. For example, the optimisation module OPT selects a first control signal to be further evaluated from a given range of control signals. For example, the selection can be based on the measured sensor data SD. Moreover, the optimisation module OPT can select a control signal based on an optimisation algorithm.

The uncertainty quantification module UQ is configured to provide and set an uncertainty range or statistical distribution for the selected first control signal CS. The uncertainty range or the statistical distribution for the first control signal CS preferably depends on the configuration of the uncertainty quantification module UQ, i.e., depends on the second configuration parameters C2. The uncertainty range or statistical distribution can depend on a given sensor uncertainty, i.e., for example the uncertainty range can be set as narrower if the given sensor uncertainty is small.

Furthermore, the uncertainty quantification module UQ is configured to calculate a performance value for control signals within the uncertainty range. Preferably, control signals within the uncertainty range are selected based on a given probability distribution.

The calculation of performance values is based on a computer-aided simulation of the technical system using a simulation model SM and considering the sensor data SD. Therefore, for each control signal at least one computer-aided simulation is executed to determine the performance of the technical system when controlled using said control signal. In other words, with the computer-aided simulation, the performance or resulting state or output of the technical system, when controlled using the respective control signal, is evaluated. Therefore, the simulation provides at least one performance value as output.

The simulation model SM can be for example stored on the controller CTL or can be read in from an external storage, e.g., from the cloud. The simulation model SM is preferably configured to simulate a performance of the technical system TS depending on a given input control signal and depending on the measured sensor data. The simulation model is preferably parametrized using to the measured sensor data SD, i.e., parameters of the simulation model SM can be adjusted depending on the sensor data SD. The computer-aided simulation is preferably executed for a predefined forecast period. When executed, the simulation model SM provides performance values depending on an input control signal and the sensor data SD. The computer-aided simulation can further also consider a given measurement uncertainty of the sensor data SD and/or a given parameter uncertainty of a parameter of simulation model SM.

The uncertainty quantification module UQ then analyses the calculated performance parameters values and it returns an analysis result ANR. For example, the uncertainty quantification module UQ analyses all possible outcomes for a given control signal within a given uncertainty range and returns one of several possible evaluation bases, e.g., average, best case, worst case, weighted effect, etc. This analysis result ANR is then passed to the optimizing module OPT. Based upon an optimisation algorithm used by the optimizing module OPT, an additional control signal/actuation option could be further investigated by retriggering a new analysis and a new chain of simulations. Or, once a termination condition has been reached, e.g., maximum number of options, expected improvement, time allotted, etc., the optimizing module can output the analysed control signal CS as optimised control signal CS_{OPT}. The optimised control signal CS_{OPT} can then be used to control the technical system. Preferably, the optimised control signal CS_{OPT} is first sent to the configuration module CFG to translate the optimised control signal/actuation option CS_{OPT} into an executable signal for an external control interface of the technical system TS.

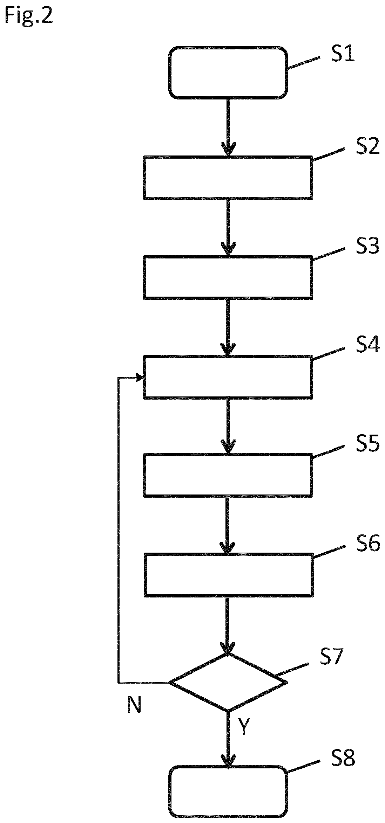

Figure 2 shows a flowchart illustrating an exemplary embodiment of the computer-implemented method for providing an optimised control signal for controlling a technical system.

In the first step S1 sensor data are provided by at least one sensor related to the technical system.

In the next step S2, a first configuration parameter for configuring an optimisation module and a second configuration parameter for configuring an uncertainty quantification module are provided. Preferably, the first and second configuration parameter depend on the measured sensor data. The optimisation module and the uncertainty quantification module are configured according to the provided first and second configuration parameters, respectively.

In the next step S3, a first actuation option is selected by the optimisation module, wherein the selection depends on the configuration of the optimisation module. Preferably, the actuation option is selected from a predefined multitude of possible actuation options by means of an optimisation algorithm.

In the next step S4 an uncertainty range for the selected actuation option is determined by the uncertainty quantification module, wherein the uncertainty quantification module is configured according to the second configuration parameter. The second configuration parameter preferably relates to a given measurement uncertainty of the sensor data. Therefore, the uncertainty range for the selected actuation option preferably depends on the measurement uncertainty of the sensor data.

In the next step S5, preferably a plurality of actuation options within the uncertainty range is evaluated by means of a computer-aided simulation of the technical system resulting in respective performance values, wherein the computer-aided simulation takes the sensor data into account. In other words, a plurality of computer-aided simulations is performed, wherein each computer-aided simulation evaluates one of the possible actuation options given by the selected uncertainty range. The computer-aided simulations return performance values representing the performance of the technical system. This results in a plurality of performance values, each associated with one actuation option.

In the next step S6, the resulting performance values are analysed and an analysis result is provided. For example, an average performance value or a best/worst performance value is determined.

The steps S5 and S6 can be performed sequentially or in parallel when analysing a plurality of input actuation options within the given uncertainty ranges.

In the next step S7, an optimised actuation option is output (branch Y) if the analysis result meets for example an optimisation condition set by the optimisation module or if a termination condition has been reached. Alternatively (branch N), if the analysis result does not meet a predefined optimisation condition, the optimisation module can select another actuation option and the method steps S4 to S6 are repeated until an optimised actuation option is found.

In the next step S8 the optimised actuation option is then output for execution. It can be translated into a signal for an external control interface of the technical system. Therefore, the technical system can then be controlled based on the optimised actuation option.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Controller (CTL) for providing an optimised control signal for controlling a technical system (TS), the controller comprising:
- an input module (IN) configured to read in sensor data (SD) related to the technical system (TS),
- a configuration module (CFG) configured to provide a first configuration parameter (C1) for configuring an optimisation module (OPT) and a second configuration parameter (C2) for configuring an uncertainty quantification module (UQ),
- the optimisation module (OPT) configured to provide a control signal depending on the first configuration parameter,
- the uncertainty quantification module (UQ) configured
- to provide an uncertainty range or statistical distribution for the control signal (CS) depending on the second configuration parameter,
- to determine respective performance values for control signals within the uncertainty range or the statistical distribution by means of a computer-aided simulation of the technical system considering the sensor data,
and
- to analyse the respective performance values and to provide an analysis result (ANR),
and
- an output module (OUT) configured to output the optimised control signal (CS_{OPT}) for controlling the technical system (TS) depending on the analysis result (ANR).

2. Controller (CTL) according to claim 1, wherein the optimisation module (OPT) is further configured to select an optimised control signal (CS_{OPT}) or to provide another control signal (CS) depending on the analysis result (ANR) provided by the uncertainty quantification module (UQ).

3. Controller (CTL) according to one of the preceding claims, wherein the first configuration parameter (C1) and/or the second configuration parameter (C2) depend on the sensor data (SD) .

4. Controller according to one of the preceding claims, wherein the first configuration parameter (C1) relates to a predefined range of control signals.

5. Controller according to one of the preceding claims, wherein the second configuration parameter (C2) relates to a given measurement uncertainty of the sensor data and/or a given parameter uncertainty of a parameter of the computer-aided simulation.

6. Controller according to one of the preceding claims, wherein the optimizing module (OPT) is configured to provide a control signal (CS) by means of an optimisation algorithm.

7. Controller according to one of the preceding claims, wherein the uncertainty quantification module (UQ) is configured to determine the respective performance values for control signals within the uncertainty range or the statistical distribution by means of the computer-aided simulation of the technical system considering also a given measurement uncertainty of the sensor data and/or a given parameter uncertainty of a parameter of the computer-aided simulation.

8. Computer-implemented method for providing an optimised control signal for controlling a technical system (TS), the method comprising the steps:
a) reading (S1) in sensor data (SD) related to the technical system (TS),
b) providing (S2) a first configuration parameter (C1) for configuring an optimisation module (OPT) and a second configuration parameter (C2) for configuring an uncertainty quantification module (UQ),
c) providing (S3), by the optimisation module, a control signal (CS) depending on the first configuration parameter (C1),
d) providing (S4), by the uncertainty quantification module, an uncertainty range or statistical distribution for the control signal depending on the second configuration parameter (C2),
e) determining (S5) respective performance values for control signals within the uncertainty range or the statistical distribution by means of a computer-aided simulation of the technical system considering the sensor data (SD),
f) analysing (S6) the respective performance values and providing an analysis result (ANR),
and
g) outputting (S7) the optimised control signal (CS_{OPT}) for controlling the technical system (TS) depending on the analysis result (ANR).

9. Computer-implemented method according to claim 8, further comprising the step:
- depending on the analysis result (ANR), outputting the optimised control signal (CS_{OPT}) or providing another control signal (CS) and repeating method steps d)-f) of claim 8.

10. Computer-implemented method according to claim 8 or 9, wherein more than one control signal and corresponding uncertainty ranges or statistical distributions are provided and the method steps e)-f) of claim 8 are performed for each of these control signals in parallel.

11. Computer program product directly loadable into the internal memory of a digital computer, comprising software code portions for performing the method steps of one of the claims 8 to 10 when said computer program product is run on a computer.
